# EUROPEAN PATENT APPLICATION

(11) **EP 4 773 645 A1**
(43) Date of publication of application: **08.07.2026**
(21) Application number: 26159910.4
(22) Date of filing: 18.02.2023
(51) Int. Cl.: H04W 12/04, H04W 4/06, H04L 9/08, H04W 12/03, H04W 12/033, H04W 12/041, H04W 12/0433

(54) **WLAN SYSTEM AND WIRELESS COMMUNICATION METHOD AND APPARATUS**

(30) Priority: 24.02.2022 CN 202210175153
(62) Divisional of application: 23759106.0
(71) Applicant: HUAWEI TECHNOLOGIES CO., LTD., Shenzhen 518129 (CN)
(72) Inventor: CHEN, Yunman, Shenzhen, 518129 (CN); WANG, Xiang, Shenzhen, 518129 (CN); WU, Xuming, Shenzhen, 518129 (CN)
(74) Representative: Gill Jennings & Every LLP

(57) **Abstract**

This application provides a WLAN system, used in the wireless communication field. The WLAN system includes an AC, a first AP, and a second AP. The AC is configured to: generate a first GTK, and send the first GTK to the first AP and the second AP. The first AP is associated with a first STA. The second AP is associated with a second STA. The first AP is configured to: encrypt data based on the first GTK, to obtain a first packet, and multicast or broadcast the first packet. The first AP is configured to send the first GTK to the first STA. The first GTK is used by the first STA to decrypt the first packet based on the first GTK. The second AP is configured to send the first GTK to the second STA. The first GTK is used by the second STA to decrypt the first packet based on the first GTK. In this application, a same GTK is used, and the first AP may multicast or broadcast the first packet for the first STA and the second STA, so that multicast or broadcast communication efficiency of the first AP is improved.

## Description

This application claims priority to Chinese Patent Application No. 202210175153.4, filed with the China National Intellectual Property Administration on February 24, 2022 and entitled "WLAN SYSTEM AND WIRELESS COMMUNICATION METHOD AND APPARATUS", which is incorporated herein by reference in its entirety.

### TECHNICAL FIELD

This application relates to the wireless communication field, and in particular, to a WLAN system and a wireless communication method and apparatus.

### BACKGROUND

In a wireless local area network (wireless local area network, WLAN), an access point (access point, AP) may transmit a packet to a station (station, STA) in a unicast, multicast, or broadcast manner. To improve communication security, the AP uses a group transient key (group transient key, GTK) to encrypt a multicast or broadcast packet. In a process in which the STA is associated with the AP, the STA obtains the GTK from the AP. The STA uses the GTK to decrypt the multicast or broadcast packet. In actual application, to improve coverage of a wireless signal, a plurality of APs may be used to form a WLAN system.

In the WLAN system formed by the plurality of APs, each STA can receive only a multicast or broadcast packet of an AP associated with the STA, resulting in low efficiency of multicast or broadcast communication of the AP.

### SUMMARY

This application provides a WLAN system and a wireless communication method and apparatus. A same GTK is used, and a first AP may multicast or broadcast a first packet for a first STA and a second STA, so that multicast or broadcast communication efficiency of the first AP is improved.

According to a first aspect, this application provides a WLAN system. The WLAN system includes an access controller (access controller, AC), a first AP, and a second AP. The first AP is associated with a first STA. The second AP is associated with a second STA. The AC is configured to: generate a first GTK, and send the first GTK to the first AP and the second AP. The first AP is configured to: encrypt data based on the first GTK, to obtain a first packet, and multicast or broadcast the first packet. The first AP is configured to send the first GTK to the first STA. The first GTK is used by the first STA to decrypt the first packet based on the first GTK. The second AP is configured to send the first GTK to the second STA. The first GTK is used by the second STA to decrypt the first packet based on the first GTK.

In an optional manner of the first aspect, the AC is configured to generate the first GTK based on a group master key (group master key, GMK), a group nonce, and a medium access control (medium access control, MAC) address that is of the AC.

In an optional manner of the first aspect, the AC is configured to send a first message to the first AP and the second AP. The first message includes the first GTK. The first message further includes at least one of the following: an identifier of the first AP, an identifier of the second AP, an identifier of a virtual access point (virtual access point, VAP) in the first AP, an identifier of a VAP in the second AP, a key replay counter, a receive sequence counter, the group nonce, or an integrity group transient key. One or more pieces of the foregoing content are added, so that reliability of multicast or broadcast can be improved. For example, the first AP uses the first GTK based on the identifier of the first AP in the first message. The second AP uses the first GTK based on the identifier of the second AP in the first message. The WLAN system further includes a third AP. The first message does not carry an identifier of the third AP. After receiving the first message, the third AP does not use the first GTK. The AC may further generate a second message. The second message carries a second GTK and the identifier of the third AP. The third AP uses the second GTK based on the identifier of the third AP. Therefore, an identifier of an AP is added, so that the reliability of multicast or broadcast can be improved.

In an optional manner of the first aspect, the AC is further configured to send a first indication to the first AP and the second AP. The first AP is further configured to disable, based on the first indication, an automatic update of a GTK. The second AP is further configured to disable, based on the first indication, an automatic update of a GTK. When the AC is the first AP, the first AP does not need to send the first indication to the first AP. The first AP sends the first indication to the second AP. In this application, based on the first indication, the following case can be prevented: A difference in the GTKs of the first AP and the second AP is caused because the first AP and the second AP automatically update the first GTK. Therefore, in this application, the reliability of multicast or broadcast can be improved.

In an optional manner of the first aspect, when a new AP is connected to the AC, the AC is further configured to send the first message to the new AP. When the AC is the first AP, the first AP is further configured to send the first message to the new AP. If the new AP uses the first GTK, the first AP may multicast or broadcast the first packet to a STA associated with the new AP. Therefore, in this application, multicast or broadcast communication efficiency can be further improved.

In an optional manner of the first aspect, when any one of the following conditions is met, the AC is further configured to send an updated first GTK to the first AP and the second AP. The conditions include: the AC restarts, a key timer in the AC expires, an encryption mode of the AC changes from public to encrypted, and a STA using the first GTK is offline. The first GTK is updated, so that security of multicast or broadcast can be improved.

In an optional manner of the first aspect, the AC is further configured to update the first GTK based on an updated GMK, an updated group nonce, and the MAC address that is of the AC, to obtain the updated first GTK.

In an optional manner of the first aspect, the WLAN system further includes a third AP. The AC is further configured to obtain grouping reference information of the three APs. The three APs include the first AP, the second AP, and the third AP. The AC is further configured to determine, based on the grouping reference information, that the first AP and the second AP use the first GTK. The AC is further configured to determine, based on the grouping reference information, that the third AP uses a second GTK. The second GTK is different from the first GTK. Distances between a plurality of APs in the WLAN system may be long. In this case, the AC may group the plurality of APs based on the grouping reference information. APs in a group use a same GTK, and APs in different groups use different GTKs. Therefore, in this application, the security of multicast or broadcast can be improved when the multicast or broadcast communication efficiency is improved.

In an optional manner of the first aspect, the AC is further configured to send the second GTK to the third AP. Alternatively, the AC is further configured to send a control indication to the third AP. The third AP is configured to generate the second GTK based on the control indication. It can be learned from the foregoing descriptions that the AC may group the plurality of APs. For example, the first AP and the second AP belong to a first group. The third AP belongs to a second group. Different groups may have different control centers. For example, a control center of the first group may be the AC. The AC may be the first AP or the second AP. A control center of the second group may be the third AP. A control center is used for generating and updating a GTK that is in a group. Therefore, by allocating different control centers to different groups, complexity of management can be reduced.

In an optional manner of the first aspect, the grouping reference information includes quality information of channels between the APs, position information of STAs associated with the three APs, or on-demand information of the STAs associated with the three APs. The quality information of the channels between the APs includes quality information of a channel between any two of the three APs. The quality information of the channel between the two APs represents, to some extent, a distance between the two APs. The distance between the two APs represents, to some extent, quality information of a channel between a STA associated with one AP and another AP. Therefore, grouping is performed based on the quality information of the channels between the APs or the position information of the STAs associated with the three APs, so that multicast or broadcast communication quality can be improved. When on-demand information of a plurality of STAs is the same, one AP may multicast or broadcast the on-demand information for the plurality of STAs. Therefore, grouping is performed based on the on-demand information, so that communication efficiency of the AP can be improved.

In an optional manner of the first aspect, the second STA is further configured to roam from the second AP to the first AP. The first AP is further configured to: encrypt data based on the first GTK, to obtain a second packet, and multicast or broadcast the second packet. The second STA is further configured to decrypt the second packet based on the first GTK. When the first AP and the second AP use different GTKs, after the second STA roams from the second AP to the first AP, the first AP may fail to send the GTK of the first AP to the second STA in a timely manner. Consequently, the second STA may fail to normally decrypt a packet multicast or broadcast by the first AP. In this case, abnormal behavior of the second STA may be generated. For example, the second STA is disconnected from the first AP, and is re-associated with the first AP. In this application, the first AP and the second AP use the same GTK. Therefore, even if the first AP does not send the GTK of the first AP to the second STA in a timely manner, the second STA may decrypt, by using the GTK sent by the second AP, the packet multicast or broadcast by the first AP. Therefore, in this application, the reliability of multicast or broadcast can be improved.

In an optional manner of the first aspect, the first AP and the second AP use a same basic service set identifier (basic service set identifier, BSSID). Some types of STAs may receive, based on the BSSID, only packets multicast or broadcast by APs associated with the STAs. If BSSIDs of the first AP and the second AP are different, the second STA may discard the first packet. The same BSSID is used, so that the second STA can normally receive the packet multicast or broadcast by the first AP. In this case, a BSSID carried in the first packet is the same as the BSSID of the second AP. Therefore, in this application, compatibility with different types of STAs can be improved.

In an optional manner of the first aspect, the first packet is a multicast packet. A destination IP address of the first packet is an IP address of a first multicast group. When the first STA belongs to the first multicast group, the first STA is configured to process a decrypted first packet. When the first STA does not belong to the first multicast group, the first STA is configured to discard a decrypted first packet. Different STAs associated with one AP may belong to different multicast groups. Different multicast groups are divided based on IP addresses, so that flexibility of multicast can be improved. Similarly, when the second STA belongs to the first multicast group, the second STA is configured to process the decrypted first packet. When the second STA does not belong to the first multicast group, the second STA is configured to discard the decrypted first packet.

In an optional manner of the first aspect, quality information of a signal between the second STA and the first AP is greater than a first threshold. It can be learned from the foregoing descriptions that, in this application, the APs in the WLAN system may be grouped. In actual application, the AC may also group the STAs. For example, when the quality information of the signal between the second STA and the first AP is greater than the first threshold, the AC determines that the second STA belongs to the first multicast group. When the quality information of the signal between the second STA and the first AP is less than the first threshold, the AC determines that the second STA does not belong to the first multicast group. In this case, the second STA may receive a multicast or broadcast packet of another AP. The another AP may be the second AP, a third AP, or the like. In this application, the STAs are grouped, so that the multicast or broadcast communication quality can be improved when the multicast or broadcast communication efficiency is improved.

According to a second aspect, this application provides a wireless communication method. The wireless communication method includes the following steps. An AC generates a first GTK. The AC sends the first GTK to a first AP and a second AP. The first GTK is used by a first STA and a second STA to decrypt a first packet multicast or broadcast by the first AP. The first AP is associated with the first STA. The second AP is associated with the second STA.

In an optional manner of the second aspect, the AC generates the first GTK based on a GMK, a group nonce, and a MAC address that is of the AC.

In an optional manner of the second aspect, the AC sends a first message to the first AP and the second AP. The first message includes the first GTK. The first message further includes at least one of the following: an identifier of the first AP, an identifier of the second AP, an identifier of a VAP in the first AP, an identifier of a VAP in the second AP, a key replay counter, a receive sequence counter, the group nonce, or an integrity group transient key.

In an optional manner of the second aspect, the wireless communication method further includes the following steps. The AC sends a first indication to the first AP and the second AP. The first indication is used by each of the first AP and the second AP to disable, based on the first indication, an automatic update of a GTK.

In an optional manner of the second aspect, when any one of the following conditions is met, the wireless communication method further includes the following steps. The AC sends an updated first GTK to the first AP and the second AP. The conditions include: the AC restarts, a key timer in the AC expires, an encryption mode of the AC changes from public to encrypted, and a STA using the first GTK is offline.

In an optional manner of the second aspect, the wireless communication method further includes the following steps. The AC updates the first GTK based on an updated GMK, an updated group nonce, and the MAC address that is of the AC, to obtain the updated first GTK.

In an optional manner of the second aspect, before the AC sends a first message to the first AP and the second AP, the wireless communication method further includes the following steps. The AC obtains grouping reference information of three APs. The three APs include the first AP, the second AP, and a third AP. The AC determines, based on the grouping reference information, that the first AP and the second AP use the first GTK. The AC determines, based on the grouping reference information, that the third AP uses a second GTK. The second GTK is different from the first GTK.

In an optional manner of the second aspect, after the AC determines, based on the grouping reference information, that the third AP uses a second GTK, the wireless communication method further includes the following steps. The AC sends the second GTK to the third AP. Alternatively, the AC sends a control indication to the third AP. The control indication is used by the third AP to generate the second GTK based on the control indication.

In an optional manner of the second aspect, the grouping reference information includes quality information of channels between the APs, position information of STAs associated with the three APs, or on-demand information of the STAs associated with the three APs. The quality information of the channels between the APs includes quality information of a channel between any two of the three APs.

In an optional manner of the second aspect, after the second STA roams from the second AP to the first AP, the first GTK is further used by the second STA to decrypt, based on the first GTK, a second packet multicast or broadcast by the first AP. The first GTK is received by the second STA from the second AP.

In an optional manner of the second aspect, the first AP and the second AP use a same BSSID.

In an optional manner of the second aspect, quality information of a signal between the second STA and the first AP is greater than a first threshold.

In an optional manner of the second aspect, when a new AP is connected to the AC, the wireless communication method further includes the following steps. The AC sends the first message to the new AP.

According to a third aspect, this application provides a wireless communication method. The wireless communication method includes the following steps. A first AP receives a first message from an AC. The first message includes a first GTK. The first AP encrypts data based on the first GTK, to obtain a first packet. The first AP multicasts or broadcasts the first packet. The first AP sends the first GTK to a first STA. The first GTK is used by the first STA to decrypt the first packet based on the first GTK. The first AP is associated with the first STA. The first AP and a second AP use the same first GTK. The first GTK is used by a second STA to decrypt the first packet based on the first GTK. The second STA is associated with the second AP.

In an optional manner of the third aspect, the first message further includes at least one of the following: an identifier of the first AP, an identifier of the second AP, an identifier of a VAP in the first AP, an identifier of a VAP in the second AP, a key replay counter, a receive sequence counter, a group nonce for generating the first GTK, or an integrity group transient key.

In an optional manner of the third aspect, the wireless communication method further includes the following steps. The first AP receives a first indication sent by the AC. The first AP disables, based on the first indication, an automatic update of a GTK.

In an optional manner of the third aspect, after the second STA roams from the second AP to the first AP, the wireless communication method further includes the following steps. The first AP encrypts data based on the first GTK, to obtain a second packet. The first AP multicasts or broadcasts the second packet. The first GTK is further used by the second STA to decrypt the second packet based on the first GTK. The first GTK is received by the second STA from the second AP.

In an optional manner of the third aspect, the first AP and the second AP use a same BSSID.

In an optional manner of the third aspect, quality information of a signal between the second STA and the first AP is greater than a first threshold.

According to a fourth aspect, this application provides a wireless communication method. The wireless communication method includes the following steps. A first AP generates a first GTK. The first AP encrypts data based on the first GTK, to obtain a first packet. The first AP multicasts or broadcasts the first packet. The first AP sends the first GTK to a second AP and a first STA. The first GTK is used by the first STA to decrypt the first packet based on the first GTK. The first AP is associated with the first STA. The first GTK is used by a second STA to decrypt the first packet based on the first GTK. The second STA is associated with the second AP.

In an optional manner of the fourth aspect, that a first AP generates a first GTK includes the following steps. The first AP generates the first GTK based on a GMK, a group nonce, and a MAC address that is of the first AP.

In an optional manner of the fourth aspect, the first AP sends a first message to the second AP and the first STA. The first message includes the first GTK. The first message further includes at least one of the following: an identifier of the second AP, an identifier of a VAP in the second AP, a key replay counter, a receive sequence counter, the group nonce for generating the first GTK, or an integrity group transient key.

In an optional manner of the fourth aspect, the wireless communication method further includes the following steps. The first AP sends a first indication to the second AP. The first indication is used by the second AP to disable, based on the first indication, an automatic update of a GTK.

In an optional manner of the fourth aspect, after the second STA roams from the second AP to the first AP, the wireless communication method further includes the following steps. The first AP encrypts data based on the first GTK, to obtain a second packet. The first AP multicasts or broadcasts the second packet. The first GTK is further used by the second STA to decrypt the second packet based on the first GTK. The first GTK is received by the second STA from the second AP.

In an optional manner of the fourth aspect, the first AP and the second AP use a same BSSID.

In an optional manner of the fourth aspect, quality information of a signal between the second STA and the first AP is greater than a first threshold.

According to a fifth aspect, this application provides a wireless communication method. The wireless communication method includes the following steps. A second AP generates a first GTK. The second AP sends the first GTK to a first AP. The first GTK is used by the first AP to encrypt data based on the first GTK, to obtain a first packet. The second AP sends the first GTK to a second STA. The first GTK is used by the second STA to decrypt, based on the first GTK, the first packet multicast or broadcast by the first AP. The second STA is associated with the second AP. The first GTK is used by a first STA to decrypt the first packet multicast or broadcast by the first AP. The first STA is associated with the first AP.

In an optional manner of the fifth aspect, that a second AP generates a first GTK includes: The second AP generates the first GTK based on a GMK, a group nonce, and a MAC address that is of the second AP.

In an optional manner of the fifth aspect, the second AP sends a first message to the first AP. The first message includes the first GTK. The first message further includes at least one of the following: an identifier of the first AP, an identifier of a VAP in the first AP, a key replay counter, a receive sequence counter, the group nonce for generating the first GTK, or an integrity group transient key.

In an optional manner of the fifth aspect, the wireless communication method further includes the following steps. The second AP sends a first indication to the first AP. The first indication is used by the first AP to disable, based on the first indication, an automatic update of a GTK.

In an optional manner of the fifth aspect, the first AP and the second AP use a same BSSID.

According to a sixth aspect, this application provides a wireless communication apparatus. The wireless communication apparatus may be an AC. The wireless communication apparatus includes a generation module and a sending module. The generation module is configured to generate a first GTK. The sending module is configured to send a first message to a first AP and a second AP. The first message includes the first GTK. The first GTK is used by a first STA and a second STA to decrypt a first packet multicast or broadcast by the first AP. The first AP is associated with the first STA. The second AP is associated with the second STA.

In an optional manner of the sixth aspect, the generation module is configured to generate the first GTK based on a GMK, a group nonce, and a MAC address that is of the wireless communication apparatus.

In an optional manner of the sixth aspect, the first message further includes at least one of the following: an identifier of the first AP, an identifier of the second AP, an identifier of a virtual access point VAP in the first AP, an identifier of a VAP in the second AP, a key replay counter, a receive sequence counter, the group nonce, or an integrity group transient key.

In an optional manner of the sixth aspect, the sending module is further configured to send a first indication to the first AP and the second AP. The first indication is used by each of the first AP and the second AP to disable, based on the first indication, an automatic update of a GTK.

In an optional manner of the sixth aspect, when any one of the following conditions is met, the sending module is further configured to send an updated first GTK to the first AP and the second AP. The conditions include: the wireless communication apparatus restarts, a key timer in the wireless communication apparatus expires, an encryption mode of the wireless communication apparatus changes from public to encrypted, and a STA using the first GTK is offline.

In an optional manner of the sixth aspect, the generation module is further configured to update the first GTK based on an updated GMK, an updated group nonce, and the MAC address that is of the wireless communication apparatus, to obtain the updated first GTK.

In an optional manner of the sixth aspect, the wireless communication apparatus further includes an obtaining module and a determining module. The obtaining module is configured to obtain grouping reference information of three APs. The three APs include the first AP, the second AP, and a third AP. The determining module is configured to determine, based on the grouping reference information, that the first AP and the second AP use the first GTK. The determining module is further configured to determine, based on the grouping reference information, that the third AP uses a second GTK. The second GTK is different from the first GTK.

In an optional manner of the sixth aspect, the sending module is further configured to send the second GTK to the third AP. Alternatively, the sending module is further configured to send a control indication to the third AP. The control indication is used by the third AP to generate the second GTK based on the control indication.

In an optional manner of the sixth aspect, the grouping reference information includes quality information of channels between the APs, position information of STAs associated with the three APs, or on-demand information of the STAs associated with the three APs. The quality information of the channels between the APs includes quality information of a channel between any two of the three APs.

In an optional manner of the sixth aspect, after the second STA roams from the second AP to the first AP, the first GTK is further used by the second STA to decrypt, based on the first GTK, a second packet multicast or broadcast by the first AP. The first GTK is received by the second STA from the second AP.

In an optional manner of the sixth aspect, the first AP and the second AP use a same BSSID.

In an optional manner of the sixth aspect, quality information of a signal between the second STA and the first AP is greater than a first threshold.

In an optional manner of the sixth aspect, when a new AP is connected to the wireless communication apparatus, the sending module is further configured to send the first message to the new AP.

According to a seventh aspect, this application provides a wireless communication apparatus. The wireless communication apparatus may be a first AP. The wireless communication apparatus includes a receiving module, an encryption module, and a sending module. The receiving module is configured to receive a first message from an AC. The first message includes a first GTK. The encryption module is configured to encrypt data based on the first GTK, to obtain a first packet. The sending module is configured to multicast or broadcast the first packet. The sending module is further configured to send the first GTK to a second AP and a first STA. The first GTK is used by the first STA to decrypt the first packet based on the first GTK. The wireless communication apparatus is associated with the first STA. The first GTK is used by a second STA to decrypt the first packet based on the first GTK. The second STA is associated with the second AP.

In an optional manner of the seventh aspect, the first message further includes at least one of the following: an identifier of the first AP, an identifier of the second AP, an identifier of a VAP in the first AP, an identifier of a VAP in the second AP, a key replay counter, a receive sequence counter, a group nonce for generating the first GTK, or an integrity group transient key.

In an optional manner of the seventh aspect, the wireless communication apparatus further includes a disabling module. The receiving module is further configured to receive a first indication sent by the AC. The disabling module is configured to disable, based on the first indication, an automatic update of a GTK.

In an optional manner of the seventh aspect, after the second STA roams from the second AP to the first AP, the encryption module is further configured to encrypt data based on the first GTK, to obtain a second packet. The sending module is further configured to multicast or broadcast the second packet. The first GTK is further used by the second STA to decrypt the second packet based on the first GTK. The first GTK is received by the second STA from the second AP.

In an optional manner of the seventh aspect, the wireless communication apparatus and the second AP use a same BSSID.

In an optional manner of the seventh aspect, quality information of a signal between the second STA and the wireless communication apparatus is greater than a first threshold.

According to an eighth aspect, this application provides a wireless communication apparatus. The wireless communication apparatus may be a first AP. The wireless communication apparatus includes a generation module, an encryption module, and a sending module. The generation module is configured to generate a first GTK. The encryption module is configured to encrypt data based on the first GTK, to obtain a first packet. The sending module is configured to multicast or broadcast the first packet. The sending module is further configured to send the first GTK to a second AP and a first STA. The first GTK is used by the first STA to decrypt the first packet based on the first GTK. The first AP is associated with the first STA. The first GTK is used by a second STA to decrypt the first packet based on the first GTK. The second STA is associated with the second AP.

In an optional manner of the eighth aspect, the generation module is configured to generate the first GTK based on a GMK, a group nonce, and a MAC address that is of the first AP.

In an optional manner of the eighth aspect, the sending module is configured to send a first message to the second AP and the first STA. The first message includes the first GTK. The first message further includes at least one of the following: an identifier of the second AP, an identifier of a VAP in the second AP, a key replay counter, a receive sequence counter, the group nonce for generating the first GTK, or an integrity group transient key.

In an optional manner of the eighth aspect, the sending module is further configured to send a first indication to the second AP. The first indication is used by the second AP to disable, based on the first indication, an automatic update of a GTK.

In an optional manner of the eighth aspect, after the second STA roams from the second AP to the first AP, the encryption module is further configured to encrypt data based on the first GTK, to obtain a second packet. The sending module is further configured to multicast or broadcast the second packet. The first GTK is further used by the second STA to decrypt the second packet based on the first GTK. The first GTK is received by the second STA from the second AP.

In an optional manner of the eighth aspect, the first AP and the second AP use a same BSSID.

In an optional manner of the eighth aspect, quality information of a signal between the second STA and the first AP is greater than a first threshold.

According to a ninth aspect, this application provides a wireless communication apparatus. The wireless communication apparatus may be a second AP. The wireless communication apparatus includes a generation module and a sending module. The generation module is configured to generate a first GTK. The sending module is configured to send the first GTK to a first AP. The first GTK is used by the first AP to encrypt data based on the first GTK, to obtain a first packet. The sending module is further configured to send the first GTK to a second STA. The first GTK is used by the second STA to decrypt, based on the first GTK, the first packet multicast or broadcast by the first AP. The second STA is associated with the second AP. The first GTK is used by a first STA to decrypt the first packet multicast or broadcast by the first AP. The first STA is associated with the first AP.

In an optional manner of the ninth aspect, the generation module is configured to generate the first GTK based on a GMK, a group nonce, and a MAC address that is of the second AP.

In an optional manner of the ninth aspect, the sending module is configured to send a first message to the first AP. The first message includes the first GTK. The first message further includes at least one of the following: an identifier of the first AP, an identifier of a VAP in the first AP, a key replay counter, a receive sequence counter, the group nonce for generating the first GTK, or an integrity group transient key.

In an optional manner of the ninth aspect, the sending module is further configured to send a first indication to the first AP. The first indication is used by the first AP to disable, based on the first indication, an automatic update of a GTK.

In an optional manner of the ninth aspect, the first AP and the second AP use a same BSSID.

According to a tenth aspect, this application provides an AC. The AC includes a processor and a transceiver. The processor is configured to generate a first GTK. The transceiver is configured to send a first message to a first AP and a second AP. The first message includes the first GTK. The first GTK is used by a first STA and a second STA to decrypt a first packet multicast or broadcast by the first AP. The first AP is associated with the first STA. The second AP is associated with the second STA.

In an optional manner of the tenth aspect, the processor is configured to generate the first GTK based on a GMK, a group nonce, and a MAC address that is of a wireless communication apparatus.

In an optional manner of the tenth aspect, the first message further includes at least one of the following: an identifier of the first AP, an identifier of the second AP, an identifier of a virtual access point VAP in the first AP, an identifier of a VAP in the second AP, a key replay counter, a receive sequence counter, the group nonce, or an integrity group transient key.

In an optional manner of the tenth aspect, the transceiver is further configured to send a first indication to the first AP and the second AP. The first indication is used by each of the first AP and the second AP to disable, based on the first indication, an automatic update of a GTK.

In an optional manner of the tenth aspect, when any one of the following conditions is met, the transceiver is further configured to send an updated first GTK to the first AP and the second AP. The conditions include: the wireless communication apparatus restarts, a key timer in the wireless communication apparatus expires, an encryption mode of the wireless communication apparatus changes from public to encrypted, and a STA using the first GTK is offline.

In an optional manner of the tenth aspect, the processor is further configured to update the first GTK based on an updated GMK, an updated group nonce, and the MAC address that is of the wireless communication apparatus, to obtain the updated first GTK.

In an optional manner of the tenth aspect, the processor is further configured to obtain grouping reference information of three APs. The three APs include the first AP, the second AP, and a third AP. The processor is further configured to determine, based on the grouping reference information, that the first AP and the second AP use the first GTK. The processor is further configured to determine, based on the grouping reference information, that the third AP uses a second GTK. The second GTK is different from the first GTK.

In an optional manner of the tenth aspect, the transceiver is further configured to send the second GTK to the third AP. Alternatively, the transceiver is further configured to send a control indication to the third AP. The control indication is used by the third AP to generate the second GTK based on the control indication.

In an optional manner of the tenth aspect, the grouping reference information includes quality information of channels between the APs, position information of STAs associated with the three APs, or on-demand information of the STAs associated with the three APs. The quality information of the channels between the APs includes quality information of a channel between any two of the three APs.

In an optional manner of the tenth aspect, after the second STA roams from the second AP to the first AP, the first GTK is further used by the second STA to decrypt, based on the first GTK, a second packet multicast or broadcast by the first AP. The first GTK is received by the second STA from the second AP.

In an optional manner of the tenth aspect, the first AP and the second AP use a same BSSID.

In an optional manner of the tenth aspect, quality information of a signal between the second STA and the first AP is greater than a first threshold.

In an optional manner of the tenth aspect, when a new AP is connected to the wireless communication apparatus, the sending module is further configured to send the first message to the new AP.

According to an eleventh aspect, this application provides a first AP. The first AP includes a processor and a transceiver. The transceiver is configured to receive a first message from an AC. The first message includes a first GTK. The processor is configured to encrypt data based on the first GTK, to obtain a first packet. The transceiver is configured to multicast or broadcast the first packet. The transceiver is further configured to send the first GTK to a first STA. The first GTK is used by the first STA to decrypt the first packet based on the first GTK. The first AP is associated with the first STA. The first AP and a second AP use the same first GTK. The first GTK is used by a second STA to decrypt the first packet based on the first GTK. The second STA is associated with the second AP.

In an optional manner of the eleventh aspect, the first message further includes at least one of the following: an identifier of the first AP, an identifier of the second AP, an identifier of a VAP in the first AP, an identifier of a VAP in the second AP, a key replay counter, a receive sequence counter, a group nonce for generating the first GTK, or an integrity group transient key.

In an optional manner of the eleventh aspect, the transceiver is further configured to receive a first indication sent by the AC. The processor is further configured to disable, based on the first indication, an automatic update of a GTK.

In an optional manner of the eleventh aspect, after the second STA roams from the second AP to the first AP, the processor is further configured to encrypt data based on the first GTK, to obtain a second packet. The transceiver is further configured to multicast or broadcast the second packet. The first GTK is further used by the second STA to decrypt the second packet based on the first GTK. The first GTK is received by the second STA from the second AP.

In an optional manner of the eleventh aspect, the first AP and the second AP use a same BSSID.

In an optional manner of the eleventh aspect, quality information of a signal between the second STA and the first AP is greater than a first threshold.

According to a twelfth aspect, this application provides a first AP. The first AP includes a processor and a transceiver. The processor is configured to generate a first GTK. The processor is configured to encrypt data based on the first GTK, to obtain a first packet. The transceiver is configured to multicast or broadcast the first packet. The transceiver is further configured to send the first GTK to a second AP and a first STA. The first GTK is used by the first STA to decrypt the first packet based on the first GTK. The first AP is associated with the first STA. The first GTK is used by a second STA to decrypt the first packet based on the first GTK. The second STA is associated with the second AP.

In an optional manner of the twelfth aspect, the processor is configured to generate the first GTK based on a GMK, a group nonce, and a MAC address that is of the first AP.

In an optional manner of the twelfth aspect, the transceiver is configured to send a first message to the second AP and the first STA. The first message includes the first GTK. The first message further includes at least one of the following: an identifier of the second AP, an identifier of a VAP in the second AP, a key replay counter, a receive sequence counter, the group nonce for generating the first GTK, or an integrity group transient key.

In an optional manner of the twelfth aspect, the transceiver is further configured to send a first indication to the second AP. The first indication is used by the second AP to disable, based on the first indication, an automatic update of a GTK.

In an optional manner of the twelfth aspect, after the second STA roams from the second AP to the first AP, the processor is further configured to encrypt data based on the first GTK, to obtain a second packet. The transceiver is further configured to multicast or broadcast the second packet. The first GTK is further used by the second STA to decrypt the second packet based on the first GTK. The first GTK is received by the second STA from the second AP.

In an optional manner of the twelfth aspect, the first AP and the second AP use a same BSSID.

In an optional manner of the twelfth aspect, quality information of a signal between the second STA and the first AP is greater than a first threshold.

According to a thirteenth aspect, this application provides a second AP. The second AP includes a processor and a transceiver. The processor is configured to generate a first GTK. The transceiver is configured to send the first GTK to a first AP. The first GTK is used by the first AP to encrypt data based on the first GTK, to obtain a first packet. The transceiver is further configured to send the first GTK to a second STA. The first GTK is used by the second STA to decrypt, based on the first GTK, the first packet multicast or broadcast by the first AP. The second STA is associated with the second AP. The first GTK is used by a first STA to decrypt the first packet multicast or broadcast by the first AP. The first STA is associated with the first AP.

In an optional manner of the thirteenth aspect, the processor is configured to generate the first GTK based on a GMK, a group nonce, and a MAC address that is of the second AP.

In an optional manner of the thirteenth aspect, the transceiver is configured to send a first message to the first AP. The first message includes the first GTK. The first message further includes at least one of the following: an identifier of the first AP, an identifier of a VAP in the first AP, a key replay counter, a receive sequence counter, the group nonce for generating the first GTK, or an integrity group transient key.

In an optional manner of the thirteenth aspect, the transceiver is further configured to send a first indication to the first AP. The first indication is used by the first AP to disable, based on the first indication, an automatic update of a GTK.

In an optional manner of the thirteenth aspect, the first AP and the second AP use a same BSSID.

According to a fourteenth aspect, this application provides a computer storage medium. The computer storage medium stores instructions; and when the instructions are executed on a computer, the computer is enabled to perform the method according to any one of the second aspect or the implementations of the second aspect; or the computer is enabled to perform the method according to any one of the third aspect or the implementations of the third aspect; or the computer is enabled to perform the method according to any one of the fourth aspect or the implementations of the fourth aspect; or the computer is enabled to perform the method according to any one of the fifth aspect or the implementations of the fifth aspect.

According to a fifteenth aspect, this application provides a computer program product. When the computer program product is executed on a computer, the computer is enabled to perform the method according to any one of the second aspect or the implementations of the second aspect; or the computer is enabled to perform the method according to any one of the third aspect or the implementations of the third aspect; or the computer is enabled to perform the method according to any one of the fourth aspect or the implementations of the fourth aspect; or the computer is enabled to perform the method according to any one of the fifth aspect or the implementations of the fifth aspect.

### BRIEF DESCRIPTION OF DRAWINGS

FIG. 1 is a schematic diagram of a first structure of a WLAN system according to an embodiment of this application;
FIG. 2 is a first schematic flowchart of a wireless communication method according to an embodiment of this application;
FIG. 3 is a second schematic flowchart of a wireless communication method according to an embodiment of this application;
FIG. 4 is a schematic diagram of a structure of a first message according to an embodiment of this application;
FIG. 5 is a first schematic flowchart of a STA grouping method according to an embodiment of this application;
FIG. 6 is a second schematic flowchart of a STA grouping method according to an embodiment of this application;
FIG. 7 is a third schematic flowchart of a wireless communication method according to an embodiment of this application;
FIG. 8 is a fourth schematic flowchart of a wireless communication method according to an embodiment of this application;
FIG. 9 is a schematic diagram of a second structure of a WLAN system according to an embodiment of this application;
FIG. 10 is a schematic diagram of a first structure of a wireless communication apparatus according to an embodiment of this application;
FIG. 11 is a schematic diagram of a second structure of a wireless communication apparatus according to an embodiment of this application; and
FIG. 12 is a schematic diagram of a structure of a wireless communication device according to an embodiment of this application.

### DESCRIPTION OF EMBODIMENTS

This application provides a WLAN system and a wireless communication method and apparatus. A same GTK is used, and a first AP may multicast or broadcast a first packet for a first STA and a second STA, so that multicast or broadcast communication efficiency of the first AP is improved.

It should be understood that terms such as "first" and "second" used in this application are merely used for distinction and description and should not be construed as indicating or implying relative importance or be construed as indicating or implying a sequence. In addition, for brevity and clarity, reference numbers and/or letters are repeated in a plurality of accompanying drawings of this application. Repetition does not indicate that there is a strictly limited relationship between various embodiments and/or configurations. For example, features or content marked by dashed lines in the accompanying drawings of this application may be understood as optional operations or optional structures of embodiments.

The WLAN system in this application is used in the wireless communication field. In the wireless communication field, to improve coverage of a wireless signal, a plurality of APs may be used to form a WLAN system. In the WLAN system formed by the plurality of APs, each STA can receive only a multicast or broadcast packet of an AP associated with the STA, resulting in low efficiency of multicast or broadcast communication of the AP.

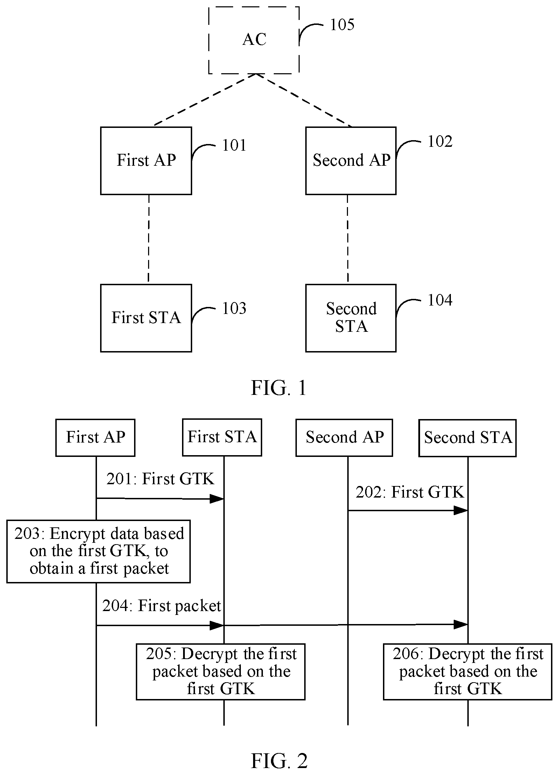

To resolve this problem, this application provides a WLAN system and a wireless communication method. FIG. 1 is a schematic diagram of a first structure of a WLAN system according to an embodiment of this application. As shown in FIG. 1, the WLAN system includes a first AP 101 and a second AP 102. The first AP 101 is associated with a first STA 103. The second AP 102 is associated with a second STA 104. In actual application, the WLAN system may further include an AC 105. The AC 105 is connected to the first AP 101 and the second AP 102 in a wireless or wired manner. Based on FIG. 1, FIG. 2 is a first schematic flowchart of a wireless communication method according to an embodiment of this application. As shown in FIG. 2, the wireless communication method includes the following steps.

In step 201, a first AP sends a first GTK to a first STA. A first AP 101 may generate the first GTK according to the following formula: GTK=PRF(GMK+GNonce+MAC(AA)) PRF is a pseudo-random function (pseudo-random function). Gnonce is a group nonce generated by the first AP 101. MAC(AA) is a BSSID of the first AP 101. The GMK is generated by the first AP 101 based on a multicast session key (multicast session key, MSK). The first AP 101 may generate the MSK in a pre-shared key (pre-shared key, PSK) mode during identity authentication. Alternatively, the first AP 101 may receive the first GTK from a second AP 102. When the WLAN system further includes an AC 105, the first AP 101 may receive the first GTK from the AC 105. Alternatively, the first AP 101 may receive, from the AC 105, information about generating a GTK. The first AP 101 generates the first GTK based on the information about generating the GTK. The information about generating the GTK may include the group nonce, the GMK, and a MAC address that is of the AC 105. The first AP 101 is associated with a first STA 103. After obtaining the first GTK, the first AP 101 sends the first GTK to the first STA 103.

In step 202, a second AP transmits the first GTK to a second STA. When the first AP 101 generates the first GTK, the second AP 102 may receive the first GTK from the first AP 101. Alternatively, the second AP 102 receives, from the first AP 101, information about generating the first GTK by the first AP 101. The second AP 102 generates the first GTK based on the information about generating the first GTK. Similarly, when the WLAN system further includes the AC 105, the second AP 102 may receive, from the AC 105, the first GTK or the information about generating the GTK. The second AP obtains a first GTK that is the same as that of the first AP. The first AP 101 is associated with the first STA 103. After obtaining the first GTK, the second AP 102 sends the first GTK to a second STA 104. It should be understood that there is no strictly limited time sequence relationship between step 201 and step 202.

In step 203, the first AP encrypts data based on the first GTK, to obtain a first packet. The first packet is a multicast packet or a broadcast packet. When the first packet is the multicast packet, a destination MAC address of the first packet may be a multicast MAC address. The multicast MAC address includes six bytes. A least significant bit of the first byte in the six bytes is 1. A destination IP address of the first packet may be a multicast internet protocol (internet protocol, IP) address. When the first packet is the broadcast packet, a destination MAC address of the first packet may be a broadcast MAC address. The broadcast MAC address includes six bytes. Each bit in the six bytes is 1. A target IP address of the first packet may be a broadcast IP address.

In step 204, the first AP multicasts or broadcasts the first packet.

In step 205, the first STA decrypts the first packet based on the first GTK. After the first STA 103 receives the first packet, the first STA 103 may read the destination MAC address in the first packet. When the destination MAC address in the first packet is the broadcast MAC address, the first STA 103 decrypts the first packet based on the first GTK. When the destination MAC address in the first packet is the multicast MAC address, the first STA 103 determines whether the first STA 103 belongs to a multicast group corresponding to the multicast MAC address. When the first STA 103 belongs to the multicast group corresponding to the multicast MAC address, the first STA 103 decrypts the first packet based on the first GTK. When the first STA 103 does not belong to the multicast group corresponding to the multicast MAC address, the first STA 103 may discard the first packet. After decrypting the first packet, the first STA 103 may obtain the destination IP address of the first packet. If the destination IP address in the first packet is the broadcast IP address, the first STA 103 may process a decrypted first packet. When the destination IP address in the first packet is the multicast IP address, the first STA 103 determines whether the first STA 103 belongs to a multicast group corresponding to the multicast IP address. When the first STA 103 belongs to the multicast group corresponding to the multicast IP address, the first STA 103 may process the decrypted first packet. When the first STA 103 does not belong to the multicast group corresponding to the multicast IP address, the first STA 103 may discard the decrypted first packet.

In step 206, the second STA decrypts the first packet based on the first GTK. For descriptions of step 206, refer to the descriptions of step 205. It should be understood that there is no strictly limited time sequence relationship between step 205 and step 206.

In this application, the first AP 101 and the second AP 102 use a same GTK. Therefore, the first AP may multicast or broadcast the first packet for the first STA and the second STA, so that multicast or broadcast communication efficiency of the first AP is improved.

In actual application, a STA may roam between a plurality of APs in the WLAN system. For example, in FIG. 2, the second STA 104 may roam from the second AP 102 to the first AP 101. After the second STA 104 roams to the first AP 101, the first AP 101 encrypts data based on the first GTK, to obtain a second packet. The first AP 101 multicasts or broadcasts the second packet. The second STA 104 may decrypt the second packet based on the first GTK received from the second AP 102.

In actual application, the first AP 101 and the second AP 102 may use a same BSSID. The second STA 104 may determine, based on the same BSSID, to decrypt the first packet by using the first GTK. It should be understood that when BSSIDs of the first AP 101 and the second AP 102 are different, the second AP 102 may send an indication to the second STA 104. The indication includes the BSSID of the first AP 101. The second STA 104 may determine, based on the indication, to decrypt the first packet by using the first GTK. It should be understood that, when the second AP 102 has a plurality of VAPs, the first AP 101 and a VAP in the plurality of VAPs may use a same BSSID.

It can be learned from the foregoing descriptions that, the first AP 101 and the second AP 102 may obtain the first GTK in a plurality of manners. In subsequent embodiments, an example in which the AC 105 generates the first GTK is used for description. It should be understood that, in subsequent examples, all steps performed by the AC 105 may be performed by the first AP 101 or the second AP 102. In addition, when the first AP 101 or the second AP 102 performs the steps performed by the AC 105, the first AP 101 or the second AP 102 does not need to perform a step of exchanging information with the first AP 101 or the second AP 102. For example, in FIG. 2, when the first AP 101 generates the first GTK, the first AP 101 does not need to send the first GTK to the first AP 101.

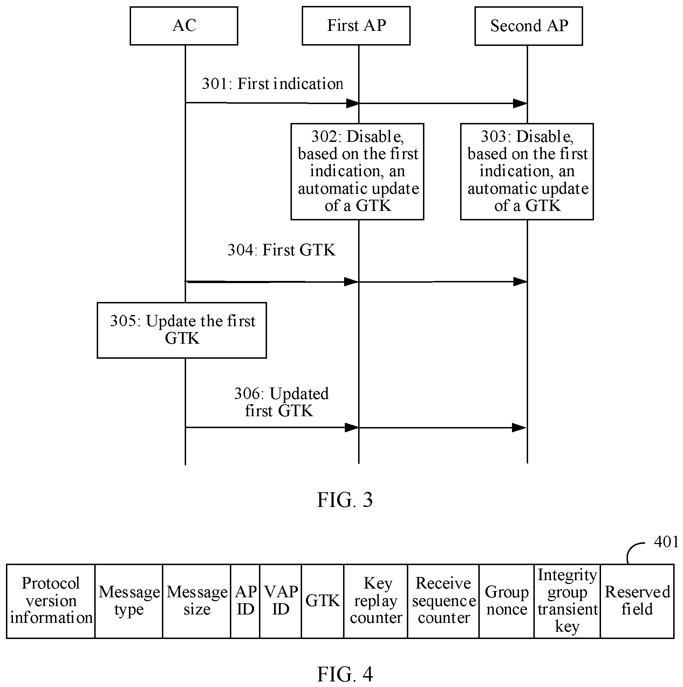

Key timers may be set in the first AP 101 and the second AP 102. After the key timers expire, the first AP 101 and the second AP 102 may separately update the first GTK. However, an updated first GTK of the first AP 101 may be different from an updated first GTK of the second AP 102. As a result, the second STA 104 cannot normally decrypt the packet multicast or broadcast by the first AP 101. Therefore, in embodiments of this application, the AC 105 may update the first GTKs together. FIG. 3 is a second schematic flowchart of a wireless communication method according to an embodiment of this application. As shown in FIG. 3, the wireless communication method includes the following steps.

In step 301, an AC sends a first indication to a first AP and a second AP. A manner of sending the first indication by an AC 105 and a format of the first indication are not limited in embodiments of this application. The AC 105 may send the first indication in a unicast, multicast, or broadcast manner. The format of the first indication may be agreed on by the AC 105 and an AP.

In step 302, the first AP disables, based on the first indication, an automatic update of a GTK. After receiving the first indication, a first AP 101 may disable a key timer for updating the GTK. Alternatively, the first AP 101 may cancel a relationship between expiration of a key timer and updating of the GTK. In other words, after the key timer expires, the first AP 101 does not update the GTK. It should be understood that, when the first AP 101 includes a plurality of VAPs, the first AP 101 may disable, only in a target VAP, the automatic update of the GTK. The target VAP uses a first GTK. For example, the first AP 101 includes a first VAP and a second VAP. The first VAP uses the first GTK. The second VAP uses a third GTK. The first AP 101 may disable, only in the first VAP, the automatic update of the GTK. In this case, after the key timer expires, the first AP 101 may still update the GTK that is in the second VAP.

In step 303, the second AP disables, based on the first indication, an automatic update of a GTK. For descriptions of step 303, refer to the descriptions of step 302. It should be understood that there is no strict time sequence limitation between step 302 and step 303.

In step 304, the AC sends the first GTK to the first AP and the second AP. The AC may generate the first GTK based on a GMK, a group nonce, and a MAC address that is of the AC 105. After generating the first GTK, the AC 105 sends the first GTK to the first AP 101 and a second AP 102. The first GTK may be carried in a first message. A manner of sending the first message by the AC 105 and a format of the first message are not limited in embodiments of this application. For example, FIG. 4 is a schematic diagram of a structure of a first message according to an embodiment of this application. As shown in FIG. 4, the first message 401 includes a protocol version information field, a message type field, a message size field, an AP ID field, a VAP ID field, a GTK field, a key replay counter (replay counter) field, a receive sequence counter (receive sequence counter, RSC) field, a group nonce (group nonce, Gnonce) field, an integrity group transient key (integrity group transient key, IGTK) field, and a reserved field.

The protocol version information field may be used for indicating that the first message is a GTK synchronization message. The message type field is used for recording a type of the first message. For example, the type of the first message is a control message. The message size field is used for recording a data size of the first message. The AP ID field is used for recording an identifier of an AP that uses a first GTK. For example, in this embodiment of this application, the AP ID field includes identifiers of the first AP 101 and the second AP 102. The VAP ID field records an identifier of a VAP that uses the first GTK. For example, a first VAP in the first AP 101 uses the first GTK. In this case, the VAP ID field includes an identifier of the first VAP. The GTK field is used for recording the first GTK. The key replay counter field is used for recording a sequence number of the first GTK. The sequence number of the first GTK is used for preventing an attacker from attacking a system by intercepting and replaying a data packet for key exchange. The receive sequence counter field carries an RSC value. The RSC value may be used for synchronizing a replay status. The RSC value may notify a value of a temporal key integrity protocol (temporal key integrity protocol, TKIP) sequence counter (TKIP sequence counter, TSC) for a frame that fails message integrity code (message integrity code, MIC) verification. The first AP 101 or the second AP 102 may identify a replayed first message based on the RSC value. The group nonce field records a group nonce used for generating the first GTK. The integrity group transient key field carries verification information. The first AP 101 or the second AP 102 may verify integrity of the first message based on the verification information. The reserved field is also referred to as a reserved field.

In step 305, the AC updates the first GTK. The AC 105 may update the GMK to obtain an updated GMK. The AC 105 may further update the group nonce to obtain an updated group nonce. The AC 105 generates an updated first GTK based on the updated GMK, the updated group nonce, and the MAC address that is of the AC 105.

In step 306, the AC sends the updated first GTK to the first AP and the second AP. When any one or more of the following conditions are met, the AC 105 sends the updated first GTK to the first AP 101 and the second AP 102. The conditions include: the AC 105 restarts, a key timer in the AC 105 expires, an encryption mode of the AC 105 changes from public to encrypted, and a STA using the first GTK is offline. The key timer may be set in the AC 105, and after the key timer expires, the AC 105 sends the updated first GTK to the first AP 101 and the second AP 102. The STA using the first GTK may be a STA associated with the first AP 101 or the second AP 102. For example, after the first STA 103 is offline, the AC 105 sends the updated first GTK to the first AP 101 and the second AP 102.

It should be understood that the updated first GTK may be carried in an updated first message. For descriptions of the first message, refer to the related descriptions of FIG. 4. In subsequent descriptions, for descriptions of a GTK sent by one device to another device, refer to the descriptions of the first message in embodiments of this application.

It should be understood that, in FIG. 3, this embodiment of this application is described by using the first AP 101 and the second AP 102 only as an example. In actual application, more APs in the WLAN system may use a same first GTK. In addition, when a new AP is connected to the AC 105, the AC 105 may send the first GTK to the new AP.

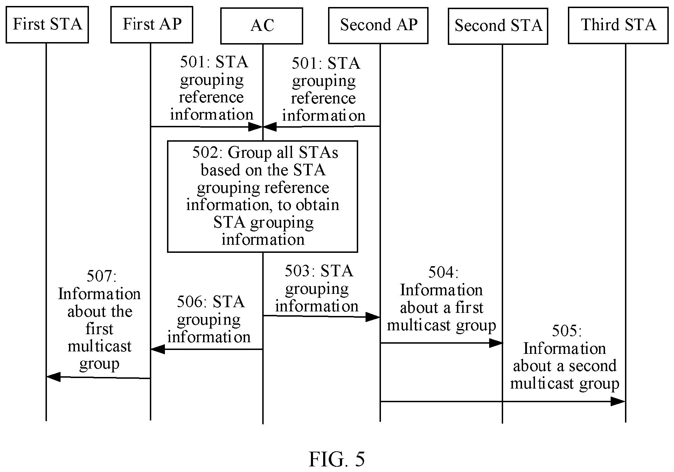

In this embodiment of this application, the first AP 101 may multicast or broadcast a first packet to the second STA 104. In addition, the second STA 104 is not associated with the first AP 101. Therefore, quality information of a channel between the second STA 104 and the first AP 101 affects multicast or broadcast communication quality. To resolve this problem, the AC 105 may group all STAs, to obtain N groups. There is a one-to-one correspondence between a quantity of the N groups and NAPs. All the STAs include a STA associated with any one of the NAPs. The AP performs multicast or broadcast for only the corresponding STA. The following uses an example in which N is equal to two for description. Two APs include the first AP 101 and the second AP 102. For example, FIG. 5 is a first schematic flowchart of a STA grouping method according to an embodiment of this application. A wireless communication method may include the STA grouping method. As shown in FIG. 5, the STA grouping method includes the following steps.

In step 501, an AC obtains STA grouping reference information from a first AP and a second AP. The STA grouping reference information may include quality information of channels between all STAs and NAPs. For example, in FIG. 5, the N APs include a first AP 101 and a second AP 102. All the STAs include a first STA 103, a second STA 104, and a third STA. The first STA 103 is associated with the first AP 101. The second STA 104 and the third STA are associated with the second AP 102. The STA grouping reference information includes quality information of channels between the first STA 103 and the first AP 101 and between the first STA 103 and the second AP 102. The STA grouping reference information further includes quality information of channels between the second STA 104 and the first AP 101 and between the second STA 104 and the second AP 102. The STA grouping reference information further includes quality information of channels between the third STA and the first AP 101 and between the third STA and the second AP 102. Quality information of a channel may be a received signal strength indication (received signal strength indication, RSSI), an interference duty cycle, noise, or the like.

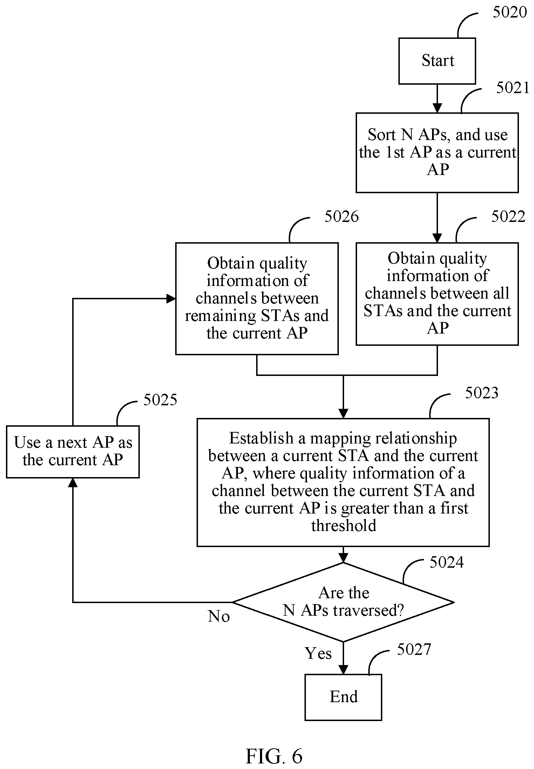

In step 502, the AC groups all the STAs based on the STA grouping reference information, to obtain STA grouping information. An AC 105 may group all the STAs according to different methods. For example, FIG. 6 is a second schematic flowchart of a STA grouping method according to an embodiment of this application. As shown in FIG. 6, the STA grouping method includes the following steps.

In step 5020, the process starts.

In step 5021, an AC sorts N APs, and uses the 1^{st} AP as a current AP. For example, an AC 105 may obtain information about a load or information about a channel condition from a first AP 101 and a second AP 102. The AC 105 performs sorting based on the load or the channel condition of the first AP 101 and the second AP 102. The information about the load may include an idle duty cycle. The AC 105 may perform sorting in a descending order based on the idle duty cycle. For example, an idle duty cycle of the first AP 101 is greater than an idle duty cycle of the second AP 102. The first AP 101 is sorted at a front position. The AC 105 uses the first AP 101 as the current AP.

In step 5022, the AC obtains quality information of channels between all STAs and the current AP. In step 501 in FIG. 5, the AC 105 obtains STA grouping reference information. The STA grouping reference information includes the quality information of the channels between all the STAs and the current AP. The quality information of the channels between all the STAs and the current AP includes quality information of channels between the first AP 101 and a first STA 103, between the first AP 101 and a second STA 104, and between the first AP 101 and a third STA.

In step 5023, the AC establishes a mapping relationship between a current STA and the current AP. Quality information of a channel between the current STA and the current AP is greater than a first threshold. It is assumed that the quality information of the channel between the first AP 101 and the first STA 103, and the quality information of the channel between the first AP 101 and the second STA 104 are greater than the first threshold. The quality information of the channel between the first AP 101 and the third STA is less than or equal to the first threshold. In this case, the current STA includes the first STA 103 and the second STA 104. The first AP 101 corresponds to the first STA 103 and the second STA 104. The first STA 103 and the second STA 104 may also be referred to as a first multicast group.

In step 5024, the AC determines whether the N APs are traversed. The N APs further include the second AP 102. Therefore, the AC 105 determines that the N APs are not traversed. The AC 105 performs step 5025.

In step 5025, the AC uses a next AP as the current AP. The AC uses the second AP 102 as the current AP.

In step 5026, the AC obtains quality information of channels between remaining STAs and the current AP. In step 501 in FIG. 5, the AC 105 obtains the STA grouping reference information. The STA grouping reference information includes the quality information of the channels between the remaining STAs and the current AP. The quality information of the channels between the remaining STAs and the current AP includes quality information of a channel between the second AP 102 and the third STA.

In step 5023, the AC establishes the mapping relationship between the current STA and the current AP. The quality information of the channel between the current STA and the current AP is greater than the first threshold. It is assumed that the quality information of the channel between the second AP 102 and the third STA is greater than the first threshold. In this case, the current STA includes the third STA. The second AP 102 corresponds to the third STA. The third STA may also be referred to as a second multicast group.

In step 5024, the AC determines whether the N APs are traversed. The AC determines that the N APs are traversed. The AC 105 performs step 5027.

In step 5027, the process ends.

In step 503, the AC sends STA grouping information of STAs to the second AP. The STA grouping information includes information about the first multicast group and information about the second multicast group. It can be learned from the foregoing descriptions of FIG. 6 that the second STA 104 belongs to the first multicast group. The third STA belongs to the second multicast group. Information about a multicast group may be an IP address of the multicast group or a MAC address of the multicast group. For example, the information about the first multicast group is an IP address of the first multicast group. The information about the second multicast group is an IP address of the second multicast group.

In step 504, the second AP sends the information about the first multicast group to the second STA.

In step 505, the second AP sends the information about the second multicast group to the third STA. When the information about the first multicast group is the IP address of the first multicast group, and the information about the second multicast group is the IP address of the second multicast group, the second AP 102 further sends the first GTK to the third STA and the second STA 104. The third STA receives a multicast or broadcast packet from the second AP 102. The third STA decrypts the multicast or broadcast packet based on the first GTK. A destination IP address of the multicast or broadcast packet is the IP address of the second multicast group. The third STA further processes a decrypted multicast or broadcast packet based on the IP address of the second multicast group. The second STA 104 receives a multicast or broadcast packet from the first AP 101. The second STA 104 decrypts the multicast or broadcast packet based on the first GTK. A destination IP address of the multicast or broadcast packet is the IP address of the first multicast group. The second STA 104 further processes the decrypted multicast or broadcast packet based on the IP address of the first multicast group. After the second STA 104 receives a multicast or broadcast packet sent by the second AP 102, the second STA 104 may decrypt the multicast or broadcast packet. However, because the destination IP address of the multicast or broadcast packet is the IP address of the second multicast group, the second STA 104 may discard a decrypted multicast or broadcast packet. Similarly, after the third STA receives a multicast or broadcast packet sent by the first AP 101, the second STA 104 may alternatively discard a decrypted multicast or broadcast packet.

When the information about the first multicast group is a MAC address of the first multicast group, and the information about the second multicast group is a MAC address of the second multicast group, a destination MAC address of the multicast or broadcast packet sent by the second AP 102 is the MAC address of the second multicast group. The third STA receives a multicast or broadcast packet from the second AP 102. The third STA decrypts the multicast or broadcast packet based on the first GTK. A destination MAC address of the multicast or broadcast packet sent by the first AP 101 is the MAC address of the first multicast group. The second STA 104 receives a multicast or broadcast packet from the first AP 101. The second STA 104 decrypts the multicast or broadcast packet based on the first GTK. The third STA may discard, based on the MAC address of the first multicast group, a multicast or broadcast packet sent by the first AP 101. Similarly, the second STA 104 may discard, based on the MAC address of the second multicast group, a multicast or broadcast packet sent by the second AP 102.

In step 506, the AC sends the STA grouping information to the first AP. For descriptions of step 506, refer to the descriptions of step 503.

In step 507, the first AP sends the information about the first multicast group to the first STA.

When the information about the first multicast group is the IP address of the first multicast group, the first AP 101 further sends the first GTK to the first STA 103. The first STA 103 receives a multicast or broadcast packet from the first AP 101. The first STA 103 decrypts the multicast or broadcast packet based on the first GTK. A destination IP address of the multicast or broadcast packet is the IP address of the first multicast group. The first STA 103 further processes a decrypted multicast or broadcast packet based on the IP address of the first multicast group. After the first STA 103 receives a multicast or broadcast packet sent by the second AP 102, the first STA 103 may decrypt the multicast or broadcast packet based on the first GTK. However, because a destination IP address of the multicast or broadcast packet sent by the second AP 102 is the IP address of the second multicast group, the first STA 103 may discard a decrypted multicast or broadcast packet.

When the information about the first multicast group is the MAC address of the first multicast group, the first AP 101 further sends the first GTK to the first STA 103. The first STA 103 receives a multicast or broadcast packet from the first AP 101. A destination MAC address of the multicast or broadcast packet is the MAC address of the first multicast group. The first STA 103 decrypts the multicast or broadcast packet based on the first GTK. After the first STA 103 receives a multicast or broadcast packet sent by the second AP 102, because a destination MAC address of the multicast or broadcast packet sent by the second AP 102 is the MAC address of the second multicast group, the first STA 103 may discard the multicast or broadcast packet sent by the second AP 102.

It should be understood that, in FIG. 5, there is no strictly limited time sequence relationship between any two steps in step 503 to step 507. Grouping of STAs in FIG. 6 is merely an example. In actual application, a person skilled in the art may group the STAs based on an actual situation.

For example, the N APs include the first AP 101 and the second AP 102. All the STAs include the first STA 103, the second STA 104, and the third STA. In step 502, the AC 105 determines, based on the STA grouping information, that the first STA 103, the second STA 104, and the third STA belong to the first multicast group. The AC 105 determines, based on the STA grouping information, that the second multicast group has no STA. In this case, the second AP 102 may not need to send a multicast or broadcast packet.

For another example, the N APs include the first AP 101, the second AP 102, and a third AP. All the STAs include the first STA 103, the second STA 104, the third STA, and a fourth STA. The fourth STA is associated with the third AP. In step 502, the AC 105 determines, based on the STA grouping information, that the first STA 103, the second STA 104, and the fourth STA belong to the first multicast group. The first multicast group corresponds to the first AP 101. The AC 105 determines, based on the STA grouping information, that the third STA belongs to the second multicast group. The second multicast group corresponds to the second AP 102. The AC 105 determines, based on the STA grouping information, that the third multicast group has no STA. The third multicast group corresponds to the third AP. In this case, the first multicast group receives a multicast or broadcast packet from the first AP 101. The second multicast group receives a multicast or broadcast packet from the second AP 102. The third AP may not need to send a multicast or broadcast packet.

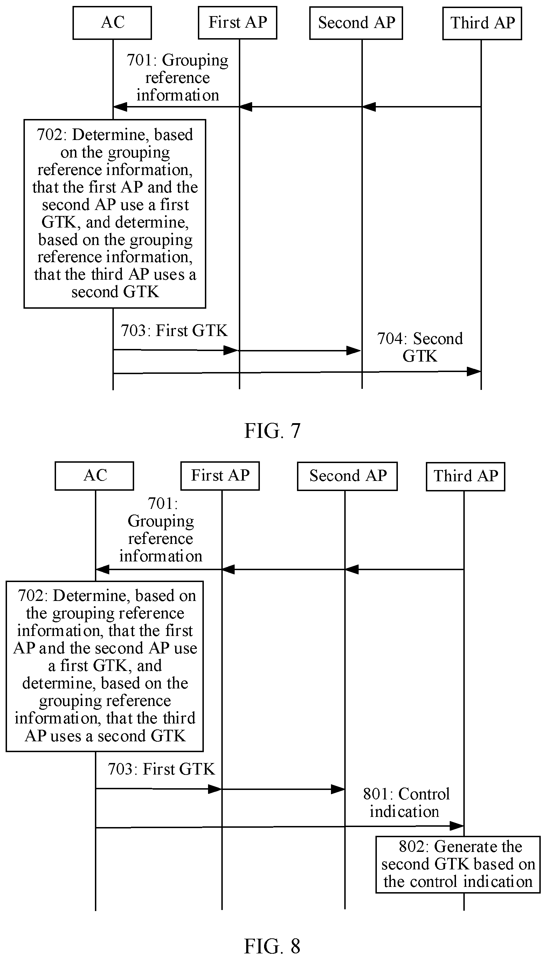

In the foregoing descriptions, the first AP 101 and the second AP 102 use the same first GTK. In actual application, distances between a plurality of APs in a WLAN system may be long. In this case, the AC 105 may group the plurality of APs based on the AP grouping reference information. The AP grouping reference information is referred to as grouping reference information for short. APs in a same group use a same GTK, and APs in different groups use different GTKs. For example, FIG. 7 is a third schematic flowchart of a wireless communication method according to an embodiment of this application. As shown in FIG. 7, the wireless communication method includes the following steps.

In step 701, an AC obtains grouping reference information from a first AP, a second AP, and a third AP. The grouping reference information may be quality information of channels between the APs, position information of STAs associated with the three APs, or on-demand information of the STAs associated with the three APs. The quality information of the channels between the APs includes quality information of a channel between any two of the three APs. The three APs include a first AP 101, a second AP 102, and the third AP. The position information of the STAs associated with the three APs may include position information of a first STA 103 and a second STA 104. The on-demand information of the STAs associated with the three APs may include on-demand information of the first STA 103 and the second STA 104.

In step 702, the AC determines, based on the grouping reference information, that the first AP and the second AP use a first GTK, and determines, based on the grouping reference information, that the third AP uses a second GTK. The following uses an example in which the grouping reference information is the quality information of the channels between the APs for description. For example, Table 1 is a matrix of the quality information of the channels between the APs provided in embodiments of this application. As shown in Table 1, quality information that is of a channel between the first AP 101 and the second AP 102 and that is measured by the first AP 101 is -60. Quality information that is of a channel between the first AP 101 and the third AP and that is measured by the first AP 101 is NA. Similarly, quality information that is of a channel between the second AP 102 and the first AP 101 and that is measured by the second AP 102 is -59. Quality information that is of a channel between the second AP 102 and the third AP and that is measured by the second AP 102 is NA.

**Table 1**

| | First AP | Second AP | Third AP |
|---|---|---|---|
| First AP | | -60 | NA |
| Second AP 1 | -59 | | NA |
| Third AP 2 | NA | NA | |

In Table 1, a larger value of quality information of a channel indicates better quality information of the channel. NA indicates that a signal from a peer end cannot be received. The AC 105 uses the first AP 101 and the second AP 102 as a first group based on Table 1. The AC 105 uses the third AP as a second group based on Table 1. The APs in the first group use the first GTK. The AP in the second group uses the second GTK.

In step 703, the AC sends the first GTK to the first AP and the second AP. For descriptions of step 703, refer to the descriptions of step 201 and step 202 in FIG. 2. After the first AP 101 and the second AP 102 receive the first GTK, the first AP 101 and the second AP 102 may decrypt, based on the first GTK, a first packet multicast or broadcast by the first AP 101.

In step 704, the AC sends the second GTK to the third AP. For descriptions of generating the second GTK by the AC 105, refer to the related descriptions of generating the first GTK by the AC 105 in FIG. 2. The second GTK is different from the first GTK. After receiving the second GTK, the third AP may send the second GTK to a fourth STA. The fourth STA is associated with the third AP. The third AP may encrypt data based on the second GTK, to obtain a multicast or broadcast packet. The fourth STA may decrypt the multicast or broadcast packet based on the second GTK. It should be understood that, for descriptions of the third AP and the fourth STA, refer to the foregoing descriptions of the first AP and the first STA. For example, the AC 105 may also send a first indication to the third AP. The third AP disables, based on the first indication, an automatic update of a GTK.

In the foregoing FIG. 7, the AC 105 is used as both a control center of the first group and a control center of the second group. A control center is responsible for maintaining a GTK of a group. In actual application, APs in different groups may have different control centers. For example, FIG. 8 is a fourth schematic flowchart of a wireless communication method according to an embodiment of this application. As shown in FIG. 8, the wireless communication method includes the following steps.

For descriptions of step 801 to step 803, refer to the descriptions of step 701 to step 703 in FIG. 7.

In step 801, an AC sends a control indication to a third AP. A sending manner of the control indication and a format of the control indication are not limited in embodiments of this application. The format of the control indication may be agreed on by the third AP and an AC 105.

In step 802, the third AP generates a second GTK based on the control indication. After receiving the control indication, the third AP becomes a control center of a second group based on the control indication. The third AP is responsible for maintaining the second GTK of the second group. For example, the third AP generates the second GTK based on the control indication. The third AP may further send the second GTK to a fourth STA. The third AP may further update the second GTK based on the control indication, to obtain an updated second GTK. The third AP sends the updated second GTK to the fourth STA.

It should be understood that in FIG. 7 and FIG. 8, three APs are merely used as an example for description. In actual application, the AC 105 may perform different grouping on a plurality of APs based on an actual situation. For example, a WLAN system further includes a fourth AP. The AC 105 uses the third AP and the fourth AP as the second group based on grouping reference information. In this case, in FIG. 8, the third AP may further send the second GTK to the fourth AP.

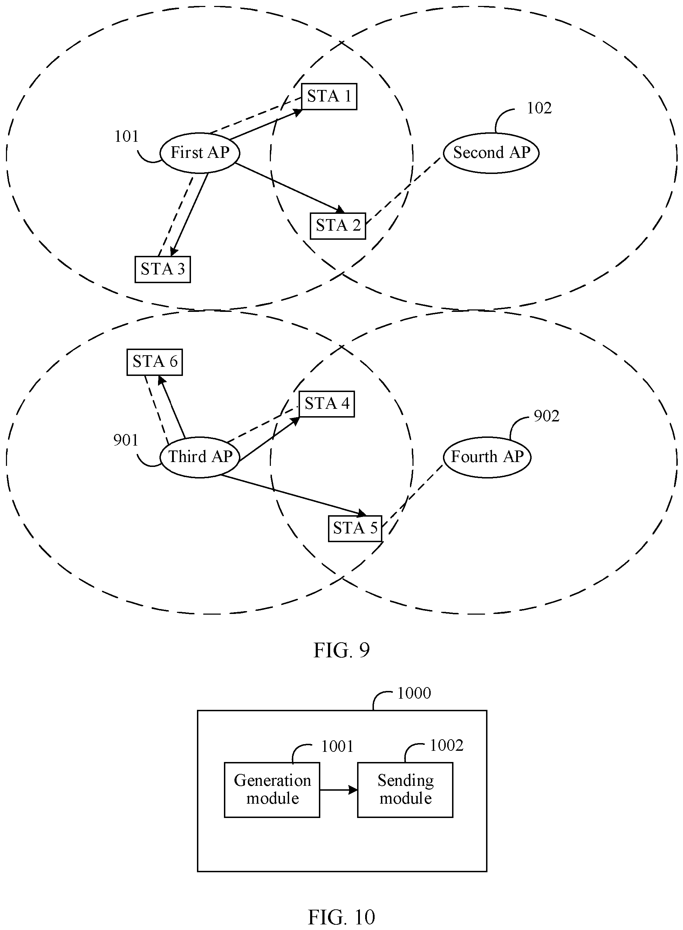

FIG. 9 is a schematic diagram of a second structure of a WLAN system according to an embodiment of this application. As shown in FIG. 9, the WLAN system includes a first AP 101, a second AP 102, a third AP 901, and a fourth AP 902. A dotted circle outside an AP represents coverage of a signal of the AP. A dashed line between an AP and a STA represents an association relationship. The first AP 101 is associated with a STA 1 and a STA 3. The second AP 102 is associated with a STA 2. The third AP 901 is associated with a STA 4 and a STA 6. The fourth AP 902 is associated with a STA 5.

A solid arrow line between an AP and a STA represents a transmission direction of a multicast or broadcast packet. An AC 105 (which is not shown in the figure) uses the first AP 101 and the second AP 102 as a first group. In the first group, the first AP 101 encrypts data by using a first GTK, to obtain a first packet. The first AP 101 multicasts or broadcasts the first packet. The STA 1, the STA 2, and the STA 3 decrypt the first packet based on the first GTK. The AC 105 uses the third AP 901 and the fourth AP 902 as a second group. In the second group, the third AP 901 encrypts data by using a second GTK, to obtain a multicast or broadcast packet. The STA 4, the STA 5, and the STA 6 decrypt, based on the second GTK, the multicast or broadcast packet sent by the third AP 901.

In FIG. 9, the AC 105 may select an AP in the second group as a control center of the second group. The AC 105 may select the control center based on a processing capability of each AP in the second group or an association situation between each AP in the second group and the AC 105. For example, the AC 105 uses an AP with a strong processing capability in the second group as the control center. Alternatively, the AC 105 uses an AP corresponding to a small quantity of nodes between the AP and the AC 105 as the control center. For example, the third AP 901 is directly connected to the AC 105, and the fourth AP 902 is connected to the AC 105 via the first AP 101. In this case, the AC 105 uses the third AP 901 as the control center of the second group.

The foregoing describes the wireless communication method and the WLAN system that are provided in embodiments of this application. The following describes wireless communication apparatuses provided in embodiments of this application. FIG. 10 is a schematic diagram of a first structure of a wireless communication apparatus according to an embodiment of this application. As shown in FIG. 10, a wireless communication apparatus 1000 includes a generation module 1001 and a sending module 1002. The generation module 1001 is configured to generate a first GTK. The sending module 1002 is configured to send a first message to a first AP and a second AP. The first message includes the first GTK. The first GTK is used by a first station STA and a second STA to decrypt a first packet multicast or broadcast by the first AP. The first AP is associated with the first STA. The second AP is associated with the second STA.

It should be understood that the wireless communication apparatus 1000 may be the AC 105 in the foregoing wireless communication method or the WLAN system. Therefore, for descriptions of the wireless communication apparatus 1000, refer to related descriptions of the foregoing wireless communication method or the WLAN system. For example, the sending module 1002 may be further configured to send a first indication to the first AP. For another example, the sending module 1002 may be further configured to send an updated first GTK to the first AP.

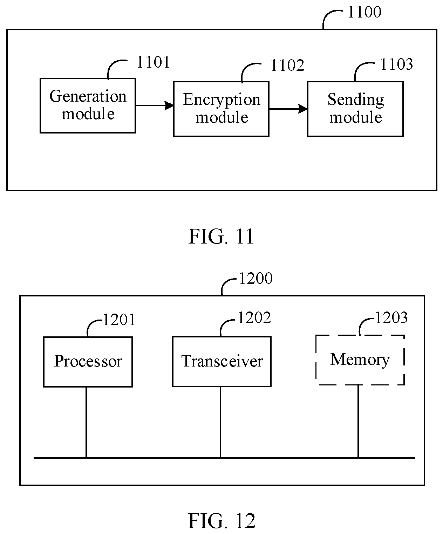

FIG. 11 is a schematic diagram of a second structure of a wireless communication apparatus according to an embodiment of this application. As shown in FIG. 11, a wireless communication apparatus 1100 includes a generation module 1101, an encryption module 1102, and a sending module 1103. The generation module 1101 is configured to generate a first GTK. The encryption module 1102 is configured to encrypt data based on the first GTK, to obtain a first packet. The sending module 1103 is configured to multicast or broadcast the first packet. The sending module 1103 is further configured to send the first GTK to a second AP and a first STA. The first GTK is used by the first STA to decrypt the first packet based on the first GTK. The wireless communication apparatus 1100 is associated with the first STA. The first GTK is used by a second STA to decrypt the first packet based on the first GTK. The second STA is associated with the second AP.

It should be understood that the wireless communication apparatus 1100 may be the first AP 101 in the foregoing wireless communication method or the WLAN system. Therefore, for descriptions of the wireless communication apparatus 1100, refer to related descriptions of the foregoing wireless communication method or the WLAN system. For example, the encryption module 1102 may be further configured to encrypt data based on the first GTK, to obtain a second packet. The sending module 1003 may be further configured to multicast or broadcast the second packet. For another example, the wireless communication apparatus 1100 may further include a receiving module and a disabling module. The receiving module is configured to receive a first indication from an AC. The disabling module disables, based on the first indication, an automatic update of a GTK.

FIG. 12 is a schematic diagram of a structure of a wireless communication device according to an embodiment of this application. As shown in FIG. 12, a wireless communication device 1200 includes a processor 1201 and a transceiver 1202. The wireless communication device 1200 may be an AC or a first AP in a WLAN system or a wireless communication method.

When the wireless communication device 1200 is the AC, the processor 1201 is configured to generate a first GTK. The transceiver 1202 is configured to send a first message to a first AP and a second AP. The first message includes the first GTK. The first GTK is used by a first STA and a second STA to decrypt a first packet multicast or broadcast by the first AP. The first AP is associated with the first STA. The second AP is associated with the second STA.

It should be understood that, for related descriptions of the wireless communication device 1200, refer to the related descriptions of the foregoing wireless communication method or the WLAN system. The processor 1201 may be further configured to perform processing steps performed by the AC 105 in the foregoing wireless communication method. For example, the processor 1201 may be further configured to perform step 305 in FIG. 3. For another example, the processor 1201 may be further configured to perform step 502 in FIG. 5. The transceiver 1202 may be further configured to perform the sending or receiving step performed by the AC 105 in the foregoing wireless communication method. For example, the transceiver 1202 may be further configured to perform step 301 in FIG. 3. For another example, the transceiver 1202 may be further configured to perform step 501 and step 503 that are in FIG. 5.

When the wireless communication device 1200 is the first AP, the processor 1201 is configured to generate a first GTK. The processor 1201 is configured to encrypt data based on the first GTK, to obtain a first packet. The transceiver 1202 is configured to multicast or broadcast the first packet. The transceiver 1202 is further configured to send the first GTK to a second AP and a first STA. The first GTK is used by the first STA to decrypt the first packet based on the first GTK. The first AP is associated with the first STA. The first GTK is used by a second STA to decrypt the first packet based on the first GTK. The second STA is associated with the second AP.

It should be understood that, for related descriptions of the wireless communication device 1200, refer to related descriptions of the foregoing wireless communication method or the WLAN system. The processor 1201 may be further configured to perform processing steps performed by the first AP 101 in the foregoing wireless communication method. For example, the processor 1201 may be further configured to perform step 302 in FIG. 3. The transceiver 1202 may be further configured to perform the sending or receiving step performed by the first AP 101 in the foregoing wireless communication method. For example, the transceiver 1202 may be further configured to perform step 504 in FIG. 5.

In another embodiment, the wireless communication device 1200 may further include a memory 1203. The memory 1203 may be a non-volatile memory, for example, a hard disk drive (hard disk drive, HDD), or may be a volatile memory (volatile memory), for example, a random access memory (random access memory, RAM). The memory 1203 is any other medium that can be configured to carry or store expected program code in a form of instructions or a data structure and that can be accessed by a computer, but is not limited thereto.

The memory 1203 may be configured to store the first GTK or the first packet. The memory 1203 may also be configured to store instructions, to enable the processor 1201 may be configured to perform the steps mentioned in the foregoing wireless communication method. Alternatively, the memory 1203 may be configured to store other instructions, to configure a parameter of the processor 1201 to implement a corresponding function.

It should be understood that the apparatus in FIG. 12 may alternatively be configured to perform the method steps mentioned in the embodiment variants or optional solutions shown in the foregoing accompanying drawings. Details are not described herein again.

In this embodiment of this application, the processor 1201 may be a general-purpose processor, a digital signal processor, an application-specific integrated circuit, a field-programmable gate array or another programmable logic device, a discrete gate or transistor logic device, or a discrete hardware component, and may implement or perform the methods, steps, and logic block diagrams disclosed in embodiments of this application. The general-purpose processor may be a microprocessor or any conventional processor or the like. The steps of the methods disclosed with reference to embodiments of this application may be directly performed and completed by a hardware processor, or may be performed and completed by using a combination of hardware in the processor and a software unit.

Program code executed by the processor 1201 to implement the foregoing wireless communication method may be stored in the memory 1203. The memory 1203 is coupled to the processor 1201. The coupling in embodiments of this application may be an indirect coupling or a communication connection between apparatuses, units, or modules, may be in an electrical form, a mechanical form, or another form, and is used for information exchange between the apparatuses, the units, or the modules. The processor 1201 may operate in collaboration with the memory 1203.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include the following: any medium that can store program code, such as a USB flash drive, a removable hard disk drive, a read-only memory, a random access memory, a magnetic disk, or an optical disc.

Based on the foregoing embodiments, an embodiment of this application further provides a chip. The chip includes a processor and is configured to implement functions involved in any one or more of the foregoing embodiments, for example, obtaining or processing the first packet involved in the foregoing methods. Optionally, the chip further includes a memory, configured to store necessary program instructions and necessary data for execution of the processor. The chip may include a chip, or may include a chip and another discrete device.

This application is described with reference to flowcharts and/or block diagrams based on the methods, the devices (system), and the computer program product in embodiments of this application. It should be understood that each procedure and/or block in the flowchart and/or the block diagram, as well as a combination of the procedure and/or the block in the flowchart and/or the block diagram, may be implemented by computer program instructions. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. This application is intended to cover these modifications and variations in embodiments of this application provided that they fall within the scope of protection defined by the following claims and their equivalent technologies.

## Claims

1. A wireless local area network WLAN system, comprising: an access controller AC, a first access point AP, and a second AP, wherein the first AP is associated with a first station STA, and the second AP is associated with a second STA, wherein
the AC is configured to: generate a first group transient key GTK, and send the first GTK to the first AP and the second AP;
the first AP is configured to: encrypt data based on the first GTK, to obtain a first packet, and multicast or broadcast the first packet;
the first AP is configured to send the first GTK to the first STA, wherein the first GTK is used by the first STA to decrypt the first packet based on the first GTK; and
the second AP is configured to send the first GTK to the second STA, wherein the first GTK is used by the second STA to decrypt the first packet based on the first GTK.

2. The WLAN system according to claim 1, wherein
that the AC is configured to generate a first GTK comprises: the AC is configured to generate the first GTK based on a group master key GMK, a group nonce, and a MAC address that is of the AC.

3. The WLAN system according to claim 2, wherein that the AC is configured to send the first GTK to the first AP and the second AP comprises: the AC is configured to send a first message to the first AP and the second AP, wherein the first message comprises the first GTK; and
the first message further comprises at least one of the following: an identifier of the first AP, an identifier of the second AP, an identifier of a virtual access point VAP in the first AP, an identifier of a VAP in the second AP, a key replay counter, a receive sequence counter, the group nonce, or an integrity group transient key.

4. The WLAN system according to claim 2 or 3, wherein the AC is further configured to send a first indication to the first AP and the second AP;
the first AP is further configured to disable, based on the first indication, an automatic update of a GTK; and
the second AP is further configured to disable, based on the first indication, an automatic update of a GTK.

5. The WLAN system according to any one of claims 2 to 4, wherein when a new AP is connected to the AC, the AC is further configured to send the first message to the new AP.

6. The WLAN system according to any one of claims 2 to 5, wherein when any one of the following conditions is met, the AC is further configured to send an updated first GTK to the first AP and the second AP; and
the conditions comprise: the AC restarts, a key timer in the AC expires, an encryption mode of the AC changes from public to encrypted, and a STA using the first GTK is offline.

7. The WLAN system according to claim 6, wherein
the AC is further configured to update the first GTK based on an updated GMK, an updated group nonce, and the MAC address that is of the AC, to obtain the updated first GTK.

8. The WLAN system according to any one of claims 2 to 7, wherein the WLAN system further comprises a third AP;
the AC is further configured to obtain grouping reference information of the three APs, wherein the three APs comprise the first AP, the second AP, and the third AP; and
the AC is further configured to determine, based on the grouping reference information, that the first AP and the second AP use the first GTK, and that the third AP uses a second GTK, wherein the second GTK is different from the first GTK.

9. The WLAN system according to claim 8, wherein
the AC is further configured to send the second GTK to the third AP; or
the AC is further configured to send a control indication to the third AP, wherein
the third AP is configured to generate the second GTK based on the control indication.

10. The WLAN system according to claim 8 or 9, wherein the grouping reference information comprises quality information of channels between the APs, position information of STAs associated with the three APs, or on-demand information of the STAs associated with the three APs; and
the quality information of the channels between the APs comprises quality information of a channel between any two of the three APs.

11. The WLAN system according to any one of claims 1 to 10, wherein the first AP and the second AP use a same basic service set identifier BSSID.

12. A wireless communication method, comprising:
generating, by an access controller AC, a first group transient key GTK; and
sending, by the AC, the first GTK to a first access point AP and a second AP, wherein the first GTK is used by a first station STA and a second STA to decrypt a first packet multicast or broadcast by the first AP, the first AP is associated with the first STA, and the second AP is associated with the second STA.

13. The method according to claim 12, wherein
the generating, by an AC, a first GTK comprises: generating, by the AC, the first GTK based on a group master key GMK, a group nonce, and a MAC address that is of the AC.

14. The method according to claim 13, wherein
the sending, by the AC, the first GTK to a first AP and a second AP comprises: sending, by the AC, a first message to the first AP and the second AP, wherein the first message comprises the first GTK; and
the first message further comprises at least one of the following: an identifier of the first AP, an identifier of the second AP, an identifier of a virtual access point VAP in the first AP, an identifier of a VAP in the second AP, a key replay counter, a receive sequence counter, the group nonce, or an integrity group transient key.

15. A wireless communication apparatus, comprising: a generation module and a sending module, wherein
the generation module is configured to generate a first group transient key GTK; and
the sending module is configured to send a first message to a first access point AP and a second AP, wherein the first message comprises the first GTK, the first GTK is used by a first station STA and a second STA to decrypt a first packet multicast or broadcast by the first AP, the first AP is associated with the first STA, and the second AP is associated with the second STA.
